# EUROPEAN PATENT SPECIFICATION

(11) **EP 1 385 383 B1**
(45) Date of publication and mention of the grant of the patent: **09.07.2008**
(21) Application number: 02766636.1
(22) Date of filing: 23.04.2002
(51) Int. Cl.: A21D 10/02, A21D 6/00, A21D 13/08

(54) **READY TO BAKE REFRIGERATED DOUGH**
BACKFERTIGER, GEKÜHLTER TEIG
PATE REFRIGEREE PRETE A CUIRE

(30) Priority: 30.04.2001 US 287393 P
(43) Date of publication of application: 04.02.2004
(73) Proprietor: SOCIETE DES PRODUITS NESTLE S.A., 1800 Vevey (CH)
(72) Inventor: MARTIN, Merrie, New Milford, CT 06776 (US)
(74) Representative: Thomas, Alain
(86) International application number: PCT/EP2002/004503
(87) International publication number: WO 2002/087345

(56) References cited:
- WO-A-01/06858
- WO-A-02/19829
- DE-A- 2 644 598
- US-A- 3 293 043
- US-A- 5 366 744

## Description

### BACKGROUND

The invention relates to a ready-for-use packaged brownie dough product which can be preserved in the refrigerator and which is prepared from flour, sugar, water, egg, emulsifier, starch, baking powder and fat. When the brownies are to be prepared, the dough product is simply removed from the package, placed in a pan and baked in an oven. The simplicity of the product enables freshly baked brownies to be made easily and rapidly.

Bakery products such as brownie products are generally provided as dry mixes to which eggs, oil and water and other ingredients such as nuts or chocolate pieces are added, the product is appropriately mixed and then placed in a pan for baking.

Furthermore, with these dry mixes, the consumer has to prepare the bakery dough, which takes time and necessitates the use of different types of kitchen utensils.

PCT WO 01/06858 discloses a brownie dough that is provided as a sheet with score lines defining pieces of dough that were broken off, placed in a baking pan in spaced relation and then baked into brownies. The spaces between the dough enabled the heat to flow around the pieces to provide more uniform baking. Also, the mix could flow into the spaces between the pieces to form the final baked product. The breaking and placement of the pieces takes some time and care by the consumer in order to properly obtain the final product.

The patent WO 02/19829 is directed to a ready-for-use frozen or refrigerated sweet dough which is prepared from flour, sugar, a leavening agent and fat and which is provided in a form which includes grooves, score lines or a combination thereof to facilitate separation of dough pieces. This solution needs from the consumer a dough manipulation, which as for the preceding solution takes some time and care by said consumer.

A refrigerated brownie batter contained in a pan is commercially available. Having the batter contained in a pan prior to baking is the ultimate in consumer convenience; however, it lacks consumer involvement and creates environmental waste, and inconvenient storage because of the excess packaging.

Accordingly, there is a need for improved brownie dough products that avoid excess packaging and that are easy and convenient for the consumer to use. The present invention now resolves this need.

### SUMMARY OF THE INVENTION

The present invention now provides the consumer with a ready-for-baking bakery dough product that requires only a minimum of manipulation by the consumer.

In one aspect, the invention relates to a method for making a fresh baked product which comprises formulating a dough that is sufficiently fluid to flow at baking temperatures; and providing the dough in the form of a bar in a sealed package. This bar has sufficient firmness to be handled without breaking such that, when fresh baked brownies are desired, a consumer simply removes the dough bar from the package, places it in a baking pan and places the pan and bar into an oven heated to a baking temperature for a sufficient time to prepare a baked product that is not collapsed in the center of the pan after baking.

The dough may be formulated in the shape of a round, oval or polygonal bar having a thickness of about 1 and 5 cm prior to packaging and storing the sealed packaged dough bar at refrigeration temperatures prior to baking. Preferably, the dough bar is configured in the shape of a rectangular bar having a length of about 15 to 40 cm and a width of about 10 to 25 cm and is packaged in sealed plastic material.

Advantageously, the dough is formulated with sugar, flour, a starch, a fat, an emulsifier and water, with the fat having a solid fat index at 10 C of above 31 but below 50, and with less than 3% by weight of cold swelling starch based on the weight of the dough. Preferably, the sugar is present in an amount of about 25 and 55%, the flour is present in an amount of about 3 and 25%, the fat is present in an amount of about 10 and 30%, the starch is present in an amount of about 1 and 20 by weight, the emulsifier is present in an amount of about 0.1 to 2%, the water is present in an amount of about 10 and 25%, egg, egg white or an egg substitute is present in an amount of up to about 20%, and a baking powder or sodium bicarbonate in an amount of up to 2%, each percent based on the weight of the dough.

To bake the product, only the following steps are conducted by the consumer: the dough bar is removed from the package and is placed in a pan, the pan and dough bar are placed in an oven that is heated to a temperature of about 160 to 185 C for a time of about 10 to 75 minutes to prepare a baked product, and the product is cut to smaller portions for serving.

The invention also relates to a place and bake dough product comprising one of the dough formulations described herein and configured in the shape of a bar that has sufficient firmness to be handled without breaking but that is sufficiently fluid to flow at baking temperatures, and a sealed package for retaining the dough therein. The dough bar may be supported in the package on a tray, and preferably, the package is maintained at refrigeration temperatures until use.

The new dough product is time saving, necessitates no need to arrange dough pieces in a pan or spread batter in a pan and guarantees a consistent quality of the final baked brownies. Furthermore, the dough has a light leavened appearance and does not have a collapsed texture after baking.

During baking, the dough flows to fill the bottom of the pan. The pan is provided by the consumer and the dough flows to fill the pan.

In addition, if desired, the pieces of the dough product can be provided with different colors, different textures, specific figures, or decorations thereon or with fillings therein to enable the consumer to prepare these variations of the final products from the single bakery dough block.

### BRIEF DESCRIPTION OF THE DRAWINGS

Preferred embodiments of the invention, specifically in the form of a block of bakery dough, can be observed by reviewing the following detailed description and appended drawing figures, wherein:
Figure 1 is a perspective view of a bakery dough bar or block in accordance with a first embodiment of the invention;
Figure 2 is a perspective view of a bakery dough block in accordance with another embodiment of the invention where two different layers of dough are laminated together; and
Figure 3 is a cross-sectional view of the dough bar of Figure 2;
Figure 4 is a cross-sectional view of a dough bar that has horizontal strips of dough placed adjacent each other; and
Figure 5 is a cross-sectional view of a dough bar of the invention that has a filling inside.

### DETAILED DESCRIPTION OF THE INVENTION

The present invention relates to a new form of pre-mixed or pre-prepared bakery dough products that are ready for baking. The term "bakery dough" is used to mean pre-mixed doughs of the types used for making bakery items where the dough is provided in the form of a sufficiently solid or semi-solid block that is typically provided under refrigerated rather than frozen conditions and which is then placed into a baking tin for baking.

The bakery dough is most preferably a brownie dough, but also may be a cake dough, a muffin dough, or any other dough product which can be baked in an oven, in a baking tin or in individual forms or cups or on a baking sheet. For instance, the individual forms can be made of baking paper or aluminium foil or can be molds in a tray (i.e., a muffin pan).

The bakery dough product according to the invention can be provided in any form but the bar or block form is particularly advantageous. This block may be either of parallelepipedal form, or of cylindrical form, or of prismatic form, or it can have any one of a variety of other shapes. While rectangular or square peripheries are preferred, the bar or block may have a periphery that is round, oval, or that corresponds to a triangle or other polygon. The shape of the bar is advantageously selected to conform to the shape of the pan in which the dough bar is to be baked. The most advantageous configuration for the bar is one that is slightly smaller in periphery than the pan in which is it to be baked. For example, a margin of between about 1 and 6 cm between the dough and the pan wall or walls is advantageous, with smaller margins resulting in thicker brownies and larger margins resulting in thinner brownies. If margins are not provided and the dough bar has essentially the same dimensions as the pan wall or walls, the edges of the brownie dough bar will be cooked to a harder consistency than if spaced margins are provided. This is not necessarily a disadvantage, as some consumers prefer harder crust on baked products. For the softest edges, however, a margin or space should be provided between the edges of the dough bar and the wall or walls of the pan so that the dough can flow to the pan walls during baking, rather than being in contact throughout the entire time of baking.

Conventional baking pans are rectangular with a length of about 33 to 40 cm, a width of about 23 to 30 cm, and sidewalls that are about 6 cm in height. Thus, dough bars that are rectangular with a length of about 20 to 35 cm, a width of about 10 to 25 cm and a thickness of about 2 to 4 cm are preferred for use with such conventional pans. One of ordinary skill in the art can easily select the preferred size of the bar based on the pan size in which it is to be baked. The formulation of the dough is such that it is sufficiently fluid to fill in the open areas of the margin so that the dough fills the entire bottom of the pan during baking.

The dough of the present invention can be stored under refrigeration temperatures, e.g., in a conventional refrigerator, at temperature preferably between 3 and 6° C. When fresh baked products are desired, the consumer simply removes the package from the refrigerator, takes the dough bar out of the package and places it into a pan, and then places the pan and dough bar into the oven for baking. For longer-term storage of the product, the packaged dough bar may be frozen. When a baked product is to be prepared, the package is simply removed from the freezer and thawed at least to refrigeration temperatures prior to baking. This can be done by placing the frozen package into the refrigerator for a sufficient time for it to warm to refrigeration temperatures, or by removing it from the freezer and placing it on a counter or table until it warms. While not detrimental to the product, it is not necessary to warm the dough bar to room temperature prior to baking.

As noted above, the only manipulation by the consumer is the placement of the dough into the prepared pan, prior to baking. There is thus no waste due to forming.

In the present description, the components are given in percent by weight of the dough. Baking powder is understood to mean a mixture of at least one bicarbonate or carbonate salt, at least one acidifying agent and at least one separating agent. None of the constituents of this mixture is critical. A carbonate compound, such as sodium bicarbonate, may be used alone, or is preferably used with sodium diphosphate or disodium dihydrogen pyrophosphate with a starch as separating agent. These mixtures are directly available commercially with a fixed composition. For example, the bicarbonate is present in an amount of 30%, the acid in an amount of 40% and the separating agent in an amount of 30%. In a specific embodiment, it is also possible to use only sodium bicarbonate, in an amount of about 0 to 2%, preferably 0.5%. Other, similar agents can be used if desired.

The flour used is cereal flour with a high content or with a lower content of proteins. Any type of flour can be taken into consideration. The flour content is normally between about 5 and 40%, preferably between 5 and 20%. It is the starch component of the flour that hydrates and allows formation of a dough. Starch can be from any cereal.

The sugar used is not critical. Its content is preferably between about 30 and 50%. The sugars which can be used are fructose, sucrose, dextrose and maize syrup. Sucrose is preferred, for example, in the form of powdered sugar. The resulting dough should have a good resistance during preservation in the refrigerator, that is to say that it should be quite firm, but should nevertheless spread well during baking. It is with sucrose that this result is best achieved. It is also necessary to have a dough with a water content in the order of about 13 to 23%. In order to increase the sugar content, it is also possible to add a sugar substitute such as sorbitol or any other known sugar substitute.

The fat used in the dough composition according to the invention is solid or liquid fat at room temperature. It can be of animal or plant origin, for example lard, tallow, margarine, maize oil, copra oil, palm oil, sunflower oil, soya bean oil. It is also possible to use fat mixtures. These fats are emulsified or stabilized with mono- or diglycerides or other emulsifiers known in the art. For example, according to the invention, margarine which already contains the emulsifier is used. The fat content is between 10 and 28%. The solids content of fat used has an influence on the flow capacity of the dough during baking. When solid fat content of the fat increases to 50 at 10 C, dough handling is improved, but dough flow is diminished and baked product texture is dry and hard.

Whole egg, egg white or an egg substitute in an amount of between about 0 and 20% is used, preferably at an amount of about 9 to 15%. This component contributes structure to the baked product and the emulsifier present in egg contributes to good dough handling properties. Emulsifiers at an amount of between 0.1 and 2% and preferably between 0.3 and 0.75% are also present. The type of emulsifier is not critical and can be from any approved sources for use in bakery products.

The dough according to the invention generally contains flavoring agents, such as vanilla flavor and cocoa powder. However the dough may or may not contain chocolate. The inside and/or surface of the dough may include solid pieces or inclusions of various edible materials. For example, chocolate, oat flakes, raisins, groundnut pieces, hazelnuts, confectionery or sugar pieces, etc. To a certain extent, the pieces or inclusions may be flowable during baking. The size of these pieces is not critical and may vary between about 1 and 25 mm. Dark, milk, white chocolate or a compound coating may be used. The content of chocolate is preferably between about 0.1 and 30%. The chocolate used is a commercial chocolate or a chocolate which can be used in pastry making or in catering.

It is very convenient according to the invention to have a block of dough already having the correct thickness in order to avoid having to further manipulate the dough. To this effect, a block is obtained which has a thickness of between about 1 and 6 cm.

The bakery dough bar can be made it into parallelepipedal pieces of between about 11 and 14 cm in width size and about 0.5 to 6 cm thick. However the dimensions are not width and length dimensions are not critical. The block can be in any shape or of any circumference.

The entire block may be baked in a pan of substantially double the size: for the example of a rectangle of around 11 x 14 cm, it is possible to use a square dough bar of 20 x 20 cm. The block is place in a baking pan so that at the end of the baking, the dough has flowed to fill the pan due to the flowability of the dough and the center of the brownie is light and aerated in texture due to the protein/starch/ emulsifier structure formed during baking. Alternatively the dough may be unleavened to provide a fudge-like texture that is dense.

Generally, the dough block is sized to fit in conventional brownie or cake baking pans, Various pan sizes can be used as long as the size of the block is adapted to the pan dimensions. After the block is placed in the pan, it is ready for baking under conventional conditions, such as at a temperature of about 175 C for 20 to 60 minutes. After baking, the final product is cooked correctly. The consumer can cut the baked product form individual servings.

The block of dough is wrapped conventionally, for example in a wrapping based on synthetic material or based on covered carton, so as to be protected from air and moisture prior to use. The shelf life of the dough according to the invention in a refrigerator is normally on the order of several months. The bakery product can be frozen, but does not require freezing.

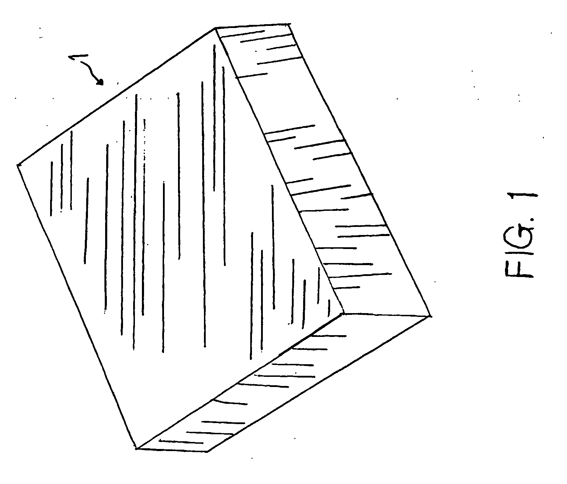

A typical block of bakery dough according to the invention is shown in Figure 1. The block (1) of bakery dough is prepared with the composition stated in Example 1. The preparation is made conventionally and is formed into a rectangular bar of desired thickness.

The invention also relates to a ready-for-use bakery dough product in the form of a block which exhibits one or more of the following features;
a) at least two different dough layers,
b) one or more decorations on the top of the block, and
c) a filling which is different from the basic dough and is the same or different throughout the bar.

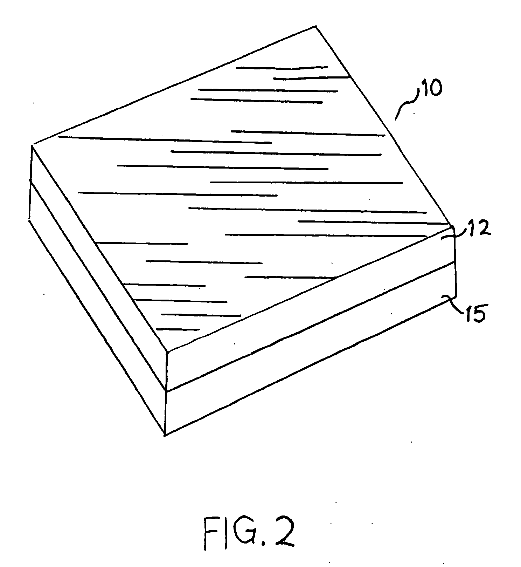

According to one embodiment of the invention, as shown in Figure 2, the block has at least two different horizontal layers. The number of layers is not critical, but from a practical point of view, this number of layers is typically between 2 and 6. Preferably, the number of layers is 2. These layers are more specifically of different compositions. This can be done for example by adding to the basic dough different types of flavors or colors, which are accepted in the food area.

For example, it is possible to have a basic dough as first layer and dough which has cocoa as the second layer, wherein the resulting cake has both a clear or light face and a dark face. The way for producing this layered dough can be either by extrusion, sheeting, lamination or by other ways which are known in the art. The layers can also be of different texture or different composition. For instance, a creamy layer can be interposed between two non-creamy layers or a creamy layer can be positioned at the bottom or top of the block. In fact, the invention contemplates a wide range of layers having different characteristics, composition, texture, taste, shapes and/or colors.

In another embodiment, two or more doughs can be swirled together to produce a marbled effect in the block or in one of the layers or strips of the block.

According to yet another embodiment of the invention, the bakery dough block has at least two different vertical dough strips. The number of strips is not critical, but typically would be between 2 and 6. Preferably, the number of strips is four. If desired, these dough strips may be of different compositions. This can be done for example by adding to the basic dough different types of acceptable food grade flavors or colors. For example, it is possible to have a basic dough as first strip and a dough that contains cocoa as a second strip. The resultant bakery product would then have a clear or light portion and a dark portion. The way for producing multiple dough stripes can be the same as for the layers, i.e., by extrusion, sheeting or other ways that are known in the art. Also, the strips can be placed in adjacent relation either horizontally or vertically in the dough block. Also, two or more dough strips can be swirled together to produce a marbled effect.

Here also, the invention contemplates a wide range of dough stripes having different characteristics, composition, texture, taste, shapes and/or colors. According to yet another embodiment of the invention, the block receives one or more decorations on its top face. The decoration(s) can be either precisely placed or randomly put on the top of the block. The possible decorations are seeds, for example, sesame seeds, or chocolate, or nuts, or sugar, or spices, or powders or an icing, or sugar balls or other decorations. The decoration can be put on the top of the block either by a sprinkling device or by manual, robotic or mechanical means, all of which are known generally in the art.

According to yet another embodiment of the invention, the block of dough has a filling therein which filling is different from the basic dough. This filling could be either a creamy or a liquid filling, or can be a solid filling, like a chocolate dough or another aromatized dough. In the case of a liquid filling, it is so calculated that the filling remains inside the basic dough after cooking. The filling can be provided in the dough in one or more streams. The number of streams as well as the amount of the filling is not critical: this filling can represent from about 5 to 50% by weight of the dough. The way of producing the block could be e.g., by coextrusion, by injection, or by placing the filling in a first layer and then putting a second layer of dough on the filling and first layer.

According to Figure 2, the block (10) of bakery dough is prepared with the composition stated in Example 2. The preparation is made by conventional means. The block is formed with two layers: a top layer (12) made with a classical dough and a lower layer (15) made with the same dough but with the addition of cocoa such as is commonly used to make conventional bakery items.

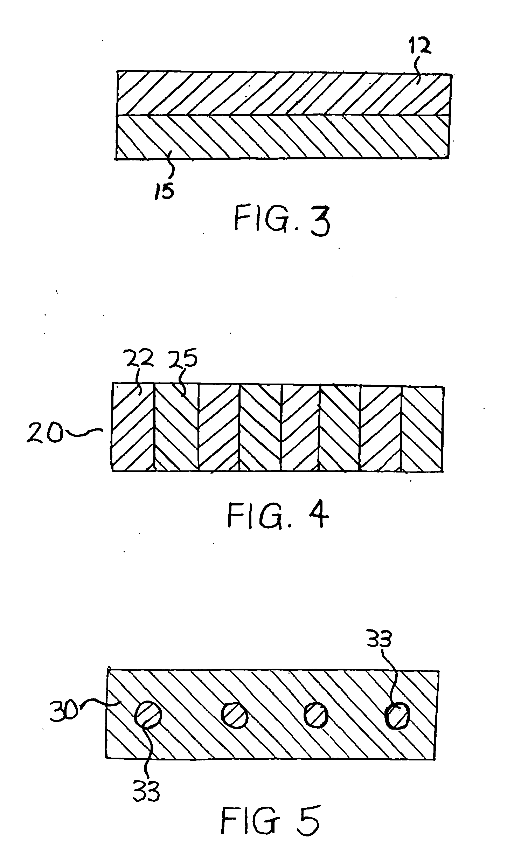

Figure 3 illustrates a section of the dough of figure 2, to illustrate the top (12) and bottom (15) layers.

Figure 4 illustrates a dough (20) that has eight adjacent vertical dough strips, in four sets of two (22),(25) different strips. Of course, it is also possible to have a different number of strips, as well as to have each strip made of a different dough.

Figure 5 shows a section of a single dough (30) that is filled with four streams (33) of filling material. The number of streams is not critical and any number can be used. For convenience, from one to six streams are advantageous. Instead of a filling, the streams can be made of a different dough or doughs. For example, the dough bar (30) can be a classical dough as before and streams (33) can be the same dough, but with cocoa.

The filling material is not critical, the only condition being that it must be capable of withstanding the baking process. The filling can be for example a fruit jam, or chocolate, or hazelnut or a mixture of chocolate and hazelnut or cream cheese, or coconut, or peanut butter. The ratio dough/filling is not critical: this ratio is normally between about 40/60 and 98/2.

### EXAMPLES

The remainder of the description is made with reference to the examples, which illustrate preferred embodiments of the invention.

### Example 2

The various ingredients stated in Table II below are mixed for making a ready-for-use brownie dough having two layers. The amounts are in weight %.

**Table II**

| Example | Light dough | Dark dough |
|---|---|---|
| Sugar 50 | 44.6 | |
| Egg white | 7.5 | 7.5 |
| Whole egg | 7.5 | 7.5 |
| Emulsifier | 0.25 | 0.25 |
| Baking powder | 0.5 | 0.5 |
| Flavouring and flavour enhancer | 0.6 | 0.6 |
| Fat | 15.75 | 15.75 |
| Water | 10.8 | 10.8 |
| Gellan Gum | 0.1 | 0.1 |
| Starch/mod | 2 | 2 |
| Flour | 5 | 5 |
| Cocoa | - | 5.4 |

This two-layer dough is made by sheeting or extrusion and the dough is stored up to 6 months in the refrigerator. The block baked in an appropriately sized baking tin or pan for 40 minutes at 175°C to form baked brownie that includes different color layers.

The concentration of sugar and flour can be adjusted to achieve the desired workability: the concentration of sugar is increased and that of flour is decreased.

### Example 3

This is an example for a small cake that has a filling. The basic dough is the dough of the preceding Example 2 (the light dough). The filling is an apricot jam with a dough/jam ratio of 70/30. This small cake is produced by coextrusion or another suitable technique. As before, the dough is stored in the refrigerator and then baked as in Example 2. During the baking, the dough opens and the jam flows on the top of the cake.

In each example, the resultant baked cake was found to be cooked quite uniformly.

From the preceding it can be seen that a wide variety of dough products can be made according to this invention. In the most preferred embodiment, the dough is a brownie dough formulation that can easily be made into fresh brownies in a short time without a great effort on the part of the consumer. Of course,

## Claims

1. A method for making fresh baked brownies which comprises :
- formulating a brownie dough with sugar, flour, a starch, a fat, an emulsifier and water, with the fat having a solid fat index at 10°C of above 31 but below 50, and less than 3% by weight of cold swelling starch based on the weight of the dough and wherein the sugar is present in an amount of about 25 and 55%, the flour is present in an amount of about 3 to 25%, the fat is present in an amount of about 10 to 30%, the starch is present in an amount of about 1 to 20% by weight, the emulsifier is present in an amount of about 0.1 to 2%, the water is present in an amount of about 10 to 25%, egg, egg white or an egg substitute is present in an amount of up to about 20%, and a baking powder in an amount of up to 2%, each percent based on the weight of the dough and has sufficient firmness at refrigeration temperatures so that it can be handled without breaking, and the dough is sufficiently fluid to flow at baking temperatures; and
- providing the dough in the form of a bar in a sealed package such that, when fresh baked brownies are desired, a consumer removes the dough bar from the package, places it directly in a baking pan without further dough manipulation, and then places the pan and bar into an oven heated to a baking temperature of 160 to 185°C for a time of 10 to 75 minutes.

2. The method of claim 1, which further comprises formulating the dough in the shape of a round, oval or polygonal bar having a thickness of about 1 to 5 cm prior to packaging and storing the sealed packaged dough bar at refrigeration temperatures prior to baking.

3. The method of claim 2, wherein the dough bar is configured in the shape of a rectangular bar having a length of about 15 to 40 cm and a width of about 10 to 25 cm and is packaged in sealed plastic material.

4. The method of claim 1, wherein the following steps are conducted by the consumer to prepare the product: the dough bar is removed from the package and is placed in a pan, the pan and dough bar are placed in an oven that is heated to a temperature of about 160 to 185°C for a time of about 10 to 75 minutes to prepare a baked product, and the baked product is then cut to smaller portions for serving.

5. The method of claim 1, wherein the dough is formulated as a bar having a thickness of about 2 to 4 cm, a length of about 20 to 30 cm and a width of about 10 to 20 cm.

6. The method of claim 1, wherein the dough bar is supported in the package on a tray, and the package is maintained at refrigeration temperatures until use.

7. The method of claim 1, wherein the dough further includes solid pieces or inclusions of edible material.

8. The method of claim 7, wherein said pieces or inclusions are made of chocolate having a size of between 1 and 25 mm and being present in an amount of between about 0.1 and 30% by weight of the dough product.

9. The method of claim 1, wherein the bar has at least two different dough layers.

10. The method of claim 1, wherein the bar contains at least two different dough colors or flavor stripes.

11. The method of claim 1, wherein the bar has at least one or more fillings therein.

12. The method of claim 1, wherein the bar has different surface decorations.

13. The method of claim 1, wherein the bar comprises at least two different doughs swirled together.

## Patentansprüche

1. Verfahren zur Herstellung von frisch gebackenen Brownies, das umfasst:
- Formulieren eines Brownie-Teigs mit Zucker, Mehl, einer Stärke, einem Fett, einem Emulgator und Wasser, wobei das Fett einen Festfett-Index bei 10 °C von mehr als 31 jedoch weniger als 50 aufweist, und weniger als 3 Gew.-% kaltquellender Stärke, bezogen auf das Gewicht des Teigs, und wobei der Zucker in einer Menge von etwa 25 bis 55 Gew.-%, das Mehl in einer Menge von etwa 3 bis 25 Gew.-%, das Fett in einer Menge von etwa 10 bis 30 Gew.-%, die Stärke in einer Menge von etwa 1 bis 20 Gew.-% vorliegt, der Emulgator in einer Menge von etwa 0,1 bis 2% vorliegt, das Wasser in einer Menge von etwa 10 bis 25% vorliegt, Ei, Eiweiß oder ein Eiersatz in einer Menge von bis zu etwa 20% vorliegt sowie Backpulver in einer Menge von bis zu 2%, wobei sich jede Prozentangabe auf das Gewicht des Teigs bezieht, und der Teig bei Kühltemperaturen eine ausreichende Festigkeit aufweist, so dass er ohne Brechen gehandhabt werden kann, und wobei der Teig ausreichend fließfähig ist, um bei Backtemperaturen zu fließen; und
- Bereitstellen des Teigs in Form eines Riegels in einer verschlossenen Packung, so dass dann, wenn frisch gebackene Brownies gewünscht werden, ein Konsument den Teigriegel aus der Packung entfernt, ihn direkt ohne weitere Teigmanipulation in einer Backform anordnet und dann die Backform und den Riegel für eine Zeit von 10 bis 75 Minuten in einen Ofen gibt, der auf eine Backtemperatur von 160 bis 185 °C geheizt ist.

2. Verfahren nach Anspruch 1, das außerdem das Formulieren des Teigs in Form eines runden, ovalen oder mehreckigen Riegels mit einer Dicke von 1 bis 5 cm vor dem Verpacken umfasst und die Lagerung des verschlossenen verpackten Teigriegels vor dem Backen bei Kühltemperaturen.

3. Verfahren nach Anspruch 3, wobei man dem Teigriegel die Konfiguration eines rechteckigen Riegels mit einer Länge von etwa 15 bis 40 cm und einer Breite von 10 bis 25 cm verliehen hat und er in einem verschlossenen Kunststoffmaterial verpackt ist.

4. Verfahren nach Anspruch 1, wobei von einem Konsumenten die folgenden Stufen zur Herstellung des Produkts durchgeführt werden: der Teigriegel wird aus der Verpackung entfernt und in einer Backform angeordnet, die Backform und der Teigriegel werden in einem Ofen angeordnet, der auf eine Temperatur von etwa 160 bis 185 °C geheizt ist, für eine Zeit von etwa 10 bis 25 Minuten, um ein gebackenes Produkt herzustellen, und wobei das gebackene Produkt dann zum Servieren in kleinere Portionen geschnitten wird.

5. Verfahren nach Anspruch 1, wobei der Teig als ein Riegel formuliert ist, der eine Dicke von etwa 2 bis 4 cm, eine Länge von etwa 20 bis 30 cm und eine Breite von etwa 10 bis 20 cm, aufweist.

6. Verfahren nach Anspruch 1, wobei der Teigriegel in der Verpackung von einem Boden getragen wird, und wobei die Verpackung bis zur Verwendung bei Kühltemperaturen gehalten wird.

7. Verfahren nach Anspruch 1, wobei der Teig außerdem feste Stücke oder Einschlüsse aus essbarem Material einschließt.

8. Verfahren nach Anspruch 7, wobei die Stücke oder Einschlüsse aus Schokolade hergestellt sind, die eine Größe zwischen 1 und 25 mm aufweisen und in einer Menge zwischen etwa 0,1 und 30 Gew.-% des Teigprodukts vorhanden sind.

9. Verfahren nach Anspruch 1, wobei der Teig wenigstens zwei unterschiedliche Teigschichten aufweist.

10. Verfahren nach Anspruch 1, wobei der Riegel wenigstens zwei unterschiedliche Teigfarben oder Aromastreifen enthält.

11. Verfahren nach Anspruch 1, wobei der Riegel wenigstens eine oder mehrere Füllungen enthält.

12. Verfahren nach Anspruch 1, wobei der Riegel unterschiedliche Oberflächendekorationen aufweist.

13. Verfahren nach Anspruch 1, wobei der Riegel wenigstens zwei unterschiedliche Teige, die miteinander verrührt sind, umfasst.

## Revendications

1. Procédé pour la préparation de brownies frais cuits au four, qui comprend les étapes consistant à :
- formuler une pâte pour brownie avec du sucre, de la farine, un amidon, une matière grasse, un émulsionnant et de l'eau, la matière grasse ayant un indice de matière grasse solide à 10°C supérieur à 31 mais inférieur à 50, et moins de 3 % en poids d'un amidon gonflant à basse température, sur la base du poids de la pâte, le sucre étant présent en une quantité d'environ 25 à 55 %, la farine étant présente en une quantité d'environ 3 à 25 %, la matière grasse étant présente en une quantité d'environ 10 à 30 %, l'amidon étant présent en une quantité d'environ 1 à 20 % en poids, l'émulsionnant étant présent en une quantité d'environ 0,1 à 2 %, l'eau étant présente en une quantité d'environ 10 à 25 %, de l'oeuf, du blanc d'oeuf ou un produit de substitution des oeufs étant présent en une quantité allant jusqu'à environ 20 %, et une poudre levante étant présente en une quantité allant jusqu'à 2 %, chaque pourcentage étant basé sur le poids de la pâte, la pâte ayant une fermeté suffisante aux températures de réfrigération pour pouvoir être manipulée sans se briser, et la pâte étant suffisamment fluide pour s'écouler aux températures de cuisson au four ; et
- fournir la pâte sous forme d'une barre dans un emballage clos hermétiquement de telle sorte que, lorsque des brownies frais cuits au four sont désirés, un consommateur enlève la barre de pâte de l'emballage, place celle-ci directement dans un récipient de cuisson au four sans manipulation supplémentaire de la pâte et place ensuite le récipient et la barre dans un four chauffé à une température de cuisson de 160 à 185°C pendant 10 à 75 minutes.

2. Procédé suivant la revendication 1, qui comprend en outre la formulation de la pâte sous forme d'une barre ronde, ovale ou polygonale ayant une épaisseur d'environ 1 à 5 cm avant emballage et stockage de la barre de pâte en emballage clos hermétiquement aux températures de réfrigération avant cuisson au four.

3. Procédé suivant la revendication 2, dans lequel la barre de pâte est configurée sous forme d'une barre rectangulaire ayant une longueur d'environ 15 à 40 cm et une largeur d'environ 10 à 25 cm et est emballée dans une matière plastique close hermétiquement.

4. Procédé suivant la revendication 1, dans lequel les étapes suivantes sont mises en oeuvre par le consommateur pour préparer le produit : la barre de pâte est enlevée de l'emballage et est placée dans un récipient, le récipient et la barre de pâte sont placés dans un four qui est chauffé à une température d'environ 160°C à 185°C pendant environ 10 à 75 minutes pour préparer un produit cuit au four, et le produit cuit au four est ensuite coupé en portions plus petites destinées à être servies.

5. Procédé suivant la revendication 1, dans lequel la pâte est formulée sous forme d'une barre ayant une épaisseur d'environ 2 à 4 cm, une longueur d'environ 20 à 30 cm et une largeur d'environ 10 à 20 cm.

6. Procédé suivant la revendication 1, dans lequel la barre de pâte est portée dans l'emballage sur un plateau et l'emballage est maintenu aux températures de réfrigération jusqu'à utilisation.

7. Procédé suivant la revendication 1, dans lequel la pâte comprend en outre des pièces ou inclusions solides de matière comestible.

8. Procédé suivant la revendication 7, dans lequel lesdites pièces ou inclusions sont constituées de chocolat ayant une dimension de 1 à 25 mm et présent en une quantité d'environ 0,1 à 30 % en poids du produit à base de pâte.

9. Procédé suivant la revendication 1, dans lequel la barre comporte au moins deux couches de pâte différentes.

10. Procédé suivant la revendication 1, dans lequel la barre comporte au moins deux couleurs de pâte différentes ou deux bandes d'arôme différentes.

11. Procédé suivant la revendication 1, dans lequel la barre renferme au moins une ou plusieurs garnitures.

12. Procédé suivant la revendication 1, dans lequel la barre a des décorations de surface différentes.

13. Procédé suivant la revendication 1, dans lequel la barre comprend au moins deux pâtes différentes mutuellement entortillées.
